(19) Europäisches Patentamt
European Patent Office
Office européen des brevets

(11) **EP 4 336 251 A1**

(12) **EUROPEAN PATENT APPLICATION**

(43) Date of publication:
**13.03.2024 Bulletin 2024/11**

(21) Application number: **22195017.3**

(22) Date of filing: **12.09.2022**

(51) International Patent Classification (IPC):
***G02F 1/35*** (2006.01)

(52) Cooperative Patent Classification (CPC):
**G02F 1/3528; G02F 1/35; G02F 1/3542;**
G02F 2201/17; G02F 2203/15

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventors:
• **EDWARD, Stephen**
**5500 AH Veldhoven (NL)**
• **ABDOLVAND, Amir**
**5500 AH Veldhoven (NL)**

(74) Representative: **ASML Netherlands B.V.**
**Corporate Intellectual Property**
**P.O. Box 324**
**5500 AH Veldhoven (NL)**

(54) **A MULTI-PASS RADIATION DEVICE**

(57) A radiation device for generating broadband output radiation upon receiving pulsed input radiation, the radiation device comprising: an oscillating cavity comprising a first reflecting surface and a second reflecting surface; and a nonlinear medium located between the first reflecting surface and the second reflecting surface; wherein the oscillating cavity is configured to receive and to oscillate therewithin said pulsed input radiation such that the pulsed input radiation undergoes a filamentation process resulting in formation of one or more filaments in the nonlinear medium and such that the pulsed input radiation undergoes a plurality of passes through the nonlinear medium such that it is spectrally broadened by the nonlinear medium to form the broadband output radiation.

**Fig. 10**

**Description**

<u>FIELD</u>

The present invention relates to a multi-pass broadband radiation source, and in particular such a broadband radiation source in relation to metrology applications in the manufacture of integrated circuits.

<u>BACKGROUND</u>

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

<u>SUMMARY</u>

According to a first aspect of the invention, there is provided a radiation device for generating broadband output radiation upon receiving pulsed input radiation, the radiation device comprising: an oscillating cavity comprising a first reflecting surface and a second reflecting surface; and a nonlinear medium located between the first reflecting surface and the second reflecting surface; wherein the oscillating cavity is configured to receive and to oscillate therewithin said pulsed input radiation such that the pulsed input radiation undergoes a filamentation process resulting in formation of one or more filaments in the nonlinear medium and such that the pulsed input radiation undergoes a plurality of passes through the nonlinear medium such that it is spectrally broadened by the nonlinear medium to form the broadband output radiation.

According to a second aspect of the invention, there is provided a radiation source, comprising a radiation device according to the first aspect, and a pump radiation source configured to output the pulsed input radiation.

According to a third aspect of the invention, there is provided a method for configuring a radiation device according to the first aspect, comprising: providing the pulsed input radiation having an input spectrum; defining a target output spectrum; determining an amount of nonlinear spectral broadening required for broadening the input spectrum to the target output spectrum via the nonlinear spectral broadening process; determining a total number of passes through the nonlinear medium for achieving the determined amount of nonlinear spectral broadening; determining an input direction for the pulsed input radiation to enter into the oscillating cavity so as to achieve the determined total number of passes through the nonlinear medium; and directing the pulsed input radiation to follow the determined input direction.

According to a fourth aspect of the invention, there is provided a method for configuring a radiation source according to the second aspect, comprising: determining a critical power for self-focusing in the nonlinear medium; configuring the pump radiation source such that the pulsed input radiation has a peak power equal to or greater than the determined critical power for self-focusing; determining a focused beam size of the pulsed input radiation in the oscillating cavity having a sufficient intensity for enabling the filamentation process; determining a radius of curvature of the first reflecting surface and/or a radius of curvature of the second reflecting surface such that upon being reflected by any of the first reflecting surface and the second reflecting surface, the pulsed input radiation is focused to have a beam size substantially the same as the determined focused beam size at the focus plane of the oscillating cavity; and separating the first reflecting surface and the second reflecting surface along a common longitudinal axis by a distance equal to one half of a sum of the radius of curvature of the first reflecting surface and the radius of curvature of the second reflecting surface.

According to a fifth aspect of the invention, there is provided a method for generating a broadband output radiation, comprising: generating a pulsed input radiation; repeatedly reflecting the pulsed input radiation back and forth in a plurality of passes through a nonlinear medium such that the pulsed input radiation undergoes a filamentation process resulting in formation of one or more filaments in the nonlinear medium and such that the pulsed input radiation is spectrally broadened by the nonlinear medium to form the broadband output radiation after the plurality passes through the nonlinear medium; and outputting the broadband output radiation.

Other aspects of the invention comprise metrology device comprising a radiation source according the second aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 depicts a schematic overview of a prior art laser-driven radiation source;
- Figure 8 depicts a schematic overview of a prior art hollow-core photonic crystal fiber based broadband radiation source;
- Figure 9 illustrates three filaments formed as a result of the filementation process in a nonlinear medium;
- Figure 10 depicts a schematic overview of a multipass radiation device based on a gaseous nonlinear medium in accordance with an embodiment;
- Figure 11 illustrates a mirror arrangement suitable for use in the multipass radiation device MPC (e.g., as shown in Figure 10);
- Figure 12 shows a flowchart of a method for configuring the multipass radiation device (e.g., as shown in Figure 10) in accordance with an embodiment;
- Figure 13 depicts a schematic overview of a multipass radiation device based on a solid-state nonlinear medium in accordance with an embodiment;
- Figure 14 shows a flowchart of a method for configuring a radiation source comprising the multipass radiation device (e.g., as shown in Figure 10 or Figure 13); and
- Figure 15 depicts a block diagram of a computer system for controlling a broadband radiation source.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

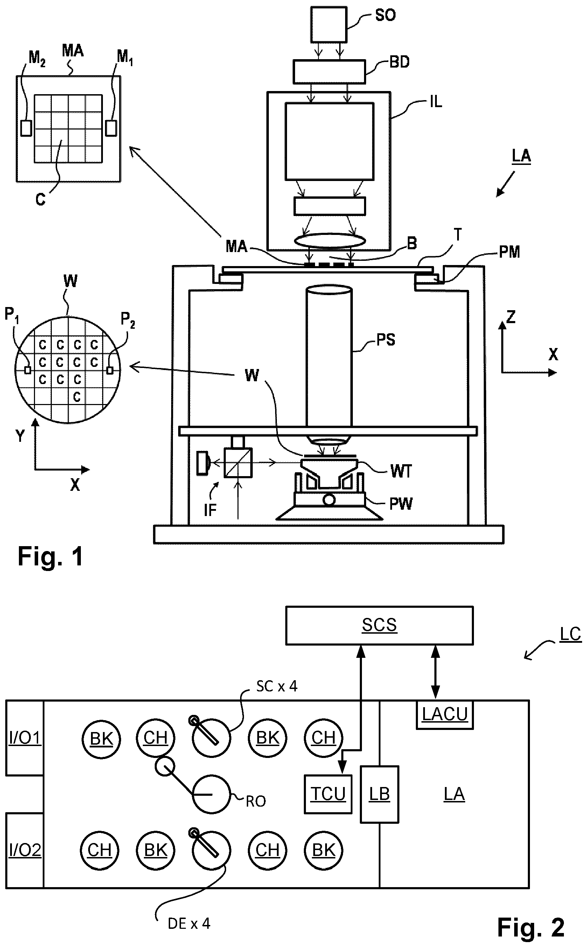

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

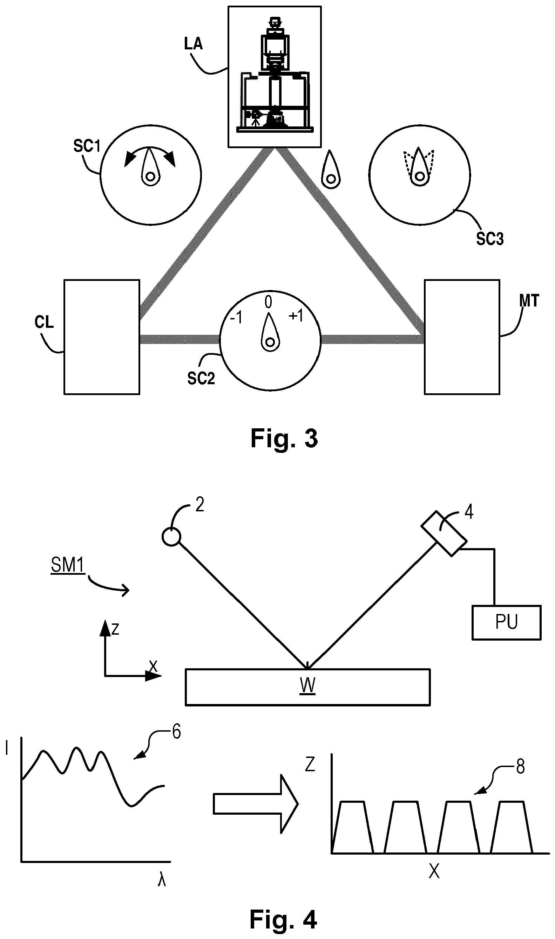

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

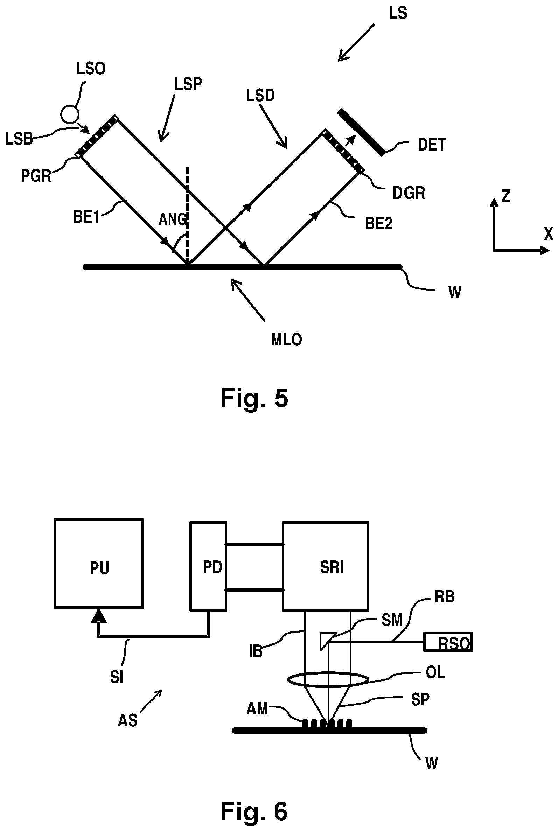

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some existing implementations, the broadband output radiation is created by tightly focusing a laser beam into an ionizable medium (e.g., a noble gas) contained in a purposely constructed chamber. The laser beam provides laser energy to the ionized medium in the chamber to sustain or create a plasma which generates a broadband radiation. Such a radiation source is known as a laser-driven radiation source.

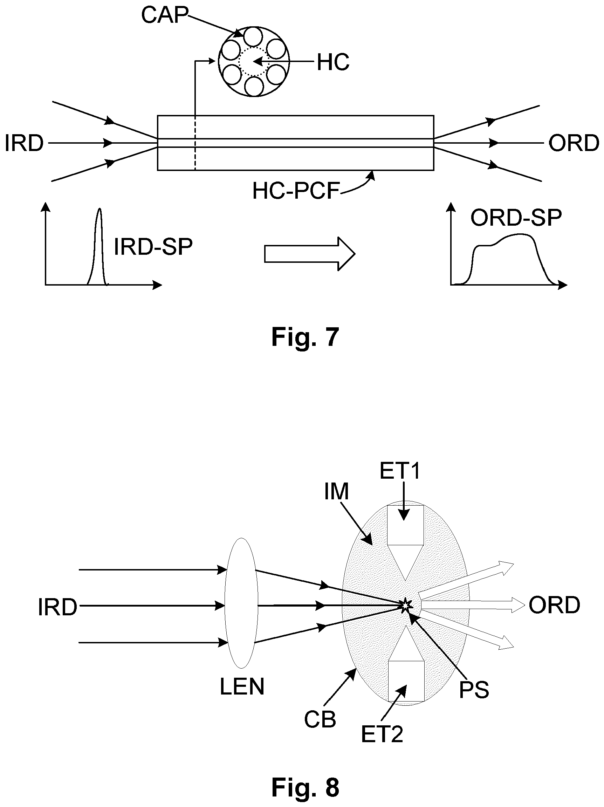

Figure 7 shows a simplified schematic of a prior art laser-driven radiation source. More details about such a radiation source can be found in US patent US7435982 (B2) which is incorporated herein by reference. As shown in Figure 7, the chamber CB comprises an ionizable medium and an ignition source. At least part of the chamber wall is made of a material transparent to an input radiation IRD. The ignition source comprises two electrodes ET1, ET2 configured to ignite or ionize the ionizable medium. The input radiation is tightly focused by a lens LEN into the ionized medium so as to sustain or create a localized high intensity plasma PS which generates a broadband output radiation ORD. The laser driven radiation source produces a non-directional emission over $4\pi$ solid angle.

In some existing implementations, the broadband output radiation is created in a photonic crystal fiber (PCF), in particular a hollow core photonic crystal fiber (HC-PCF) comprising anti-resonant structures for confinement of radiation. HC-PCF with anti-resonant structures are particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source.

Figure 8 shows a simplified schematic of a prior art HC-PCF based broadband radiation source. More details about such a radiation source can be found in US patent US 11237486 (B2). As shown in Figure 8, the HC-PCF comprises a hollow core HC and a cladding portion surrounding the hollow core HC. The cladding portion comprises a plurality of anti-resonant elements for guiding radiation through the hollow core HC. In this particular example, the cladding portion comprises a single ring of six tubular capillaries CAP. The hollow core HC is filled with a working medium (e.g., a gas) at a certain pressure. After being coupled into the gas-filled hollow core HC from one end of the fiber, a narrowband input radiation IRD undergoes a nonlinear spectral broadening process and eventually becomes a broadband output radiation ORD that exits the opposite end of the fiber. The HC-PCF radiation source produces a highly directional emission.

There are advantages and disadvantages to both types of radiations sources when compared with each other. For example, laser driven radiation sources generally have a simpler system design than HC-PCF based radiation sources. This is evidenced by comparing the two example radiations sources shown in Figures 7 and 8 respectively. A less complex system design enables reduction of cost of goods and miniaturization. HC-PCF based radiation sources generally have broader spectral coverage and directionality of the emitted broadband radiation which increases the radiance of the system. At the same time, HC-PCF based radiation sources require highly specialized fibers which increases the complexity of the system.

Both types of radiation sources suffer from lacking a reliable route to power scalability and lifetime extension. In a laser driven radiation source, unidirectional emission of the broadband output radiation and low collection efficiency requires increasing the power of the input radiation for power scalability, resulting in various lifetime issues. In a HC-PCF based radiation source, power scaling is achieved by increasing the pulse repetition rate of the input radiation. Such an approach is problematic as it causes thermal effects in the fiber which result in reduced lifetime and output instabilities.

Multipass cells comprising a nonlinear medium (or nonlinear multipass cells) have been developed to provide an alternative route for nonlinear spectral broadening and/or nonlinear temporal compression of a laser pulse. Allowing a laser pulse to pass through a nonlinear medium multiple times means the nonlinearity required for a given amount of spectral broadening is distributed over a number of passes. As such, to produce a same target spectrum, the peak intensity of the laser pulse required in a multipass cell is much lower than that required in a single-pass configuration (with the same nonlinear medium). While nonlinear multipass cells have a great potential for power scaling (e.g., average power scaling), current developments (e.g., the work reported in the scientific publications "Nonlinear temporal compression in multipass cells: Theory", Marc Hanna, Xavier Délen, Loïc Lavenu, Florent Guichard, Yoann Zaouter, Frédéric Druon, Patrick Georges, Journal of the Optical Society of America B, Vol. 34, Page 1340, 2017 and "Multipass-cell-based post-compression of radially and azimuthally polarized pulses to the sub-two-cycle regime", Huabao Cao, Roland Nagymihály, Vladimir Chyvkov, Nikita Khodakovskiy, and Mikhail Kalashnikov, Journal of the Optical Society of America B. Vol. 36, pp. 2517-2525, 2019., both of which are incorporated herein by reference) have been focused mainly on further pulse energy scaling and/or further extension of spectral coverage. However, the average power of existing nonlinear multipass cells remains limited and insufficient for many metrology applications as described above. Therefore, it is desirable to better exploit the power scalability of nonlinear multipass cells so as to produce high power broadband radiation suitable for use in the aforementioned metrology systems.

According to a first aspect of the present disclosure, there is provided a radiation device for generating broadband output radiation upon receiving pulsed input radiation, the radiation device comprising: an oscillating cavity comprising a first reflecting surface and a second reflecting surface; and a nonlinear medium located between the first reflecting surface and the second reflecting surface; wherein the oscillating cavity is configured to receive and to oscillate therewithin said pulsed input radiation such that the pulsed input radiation undergoes a filamentation process resulting in formation of one or more filaments in the nonlinear medium and such that the pulsed input radiation undergoes a plurality of passes through the nonlinear medium such that it is spectrally broadened by the nonlinear medium to form the broadband output radiation.

Note that the oscillating cavity referenced above should be differentiated from a laser cavity within which a laser pulse travels back and forth on the same optical path for an infinite number of bounces. In the context of the present disclosure, the oscillating cavity is defined as a space surrounded by the first reflecting surface and the second reflecting surface. Within such a space, a laser pulse travels back and forth for a finite number of bounces, wherein after each bounce from one of the reflecting surfaces, the laser pulse may travel a different path to reach the other reflecting surface.

In contrast to many existing nonlinear multipass cells (e.g., EP3143669A1, which is incorporated herein by reference) where the peak power of the input radiation is deliberately kept below the critical power for self-focusing so as to prevent the self-focusing effect (also known the Kerr effect) from negatively impacting on the spectral broadening, the inventors have found that the self-focusing effect can be beneficial in increasing the efficiency of the nonlinear spectral broadening process in a nonlinear multipass cell and thus the power of the broadband output radiation as long as the pulsed input radiation undergoes a filamentation process during each pass through the nonlinear medium. As described in the scientifical publication "Ultrafast supercontinuum generation in bulk condensed media", Audrius Dubietis, Gintaras Tamosauskas, Rosvaldas Suminas, Vytautas Jukna, Lithuanian Journal of Physics, Vol. 57, No. 3, pp. 113-157 (2017), which is incorporated herein by reference, the filamentation process "stems from the interplay between self-focusing, self-phase modulation, multiphoton/ionization-induced free electron plasma, leading to the appearance of "a dynamic structure with an intense core, that is able to propagate over extended distances much larger than the typical diffraction length while keeping a narrow beam size without the help of any external guiding mechanism".

The self-focusing effect results from the intensity dependent refractive index n which is expressed as:

$$n = n_0 + n_2 I , \qquad [1]$$

wherein , $n_0$ is the linear refractive index, $n_2$ is the nonlinear refractive index related to the third-order optical susceptibility of the material, I is the intensity of the pulsed input radiation. The induced change of the refractive index is proportional to the local intensity and thus is higher at the center and lower at the peripheral region of the beam of pulsed input radiation. Thus, the nonlinear medium acts like a lens which enforces the beam of pulsed input radiation to self-focus.

The self-phase modulation (SPM) is a well-known nonlinear effect which results from a nonlinear change being imparted in the phase of the pulse by the time-varying refractive index, as expressed in equation [1]. The nonlinear phase change leads to a frequency change which results in the time-varying instantaneous frequency and thus spectral broadening of the pulse. The time-varying instantaneous frequency $\delta\omega(t)$ is expressed as (assuming a Gaussian laser pulse):

$$\delta\omega(t) = -2\frac{\omega_0}{ct_p^2} n_2 I_0 \exp\left(-\frac{t^2}{t_p^2}\right) tz, \qquad [2]$$

where $t_p^2$ is the pulse duration of the Gaussian pulse, $\omega_0$ is the carrier frequency and z is the propagation distance, and t is the time.

The requirement for the start of the filamentation process is that the peak power of the input pulse reaches the self-focusing threshold or the critical power for self-focusing $P_{cr}$:

$$P_{cr} = 3.72\lambda^2/8\pi n_0 n_2 , \qquad [3]$$

where λ is the wavelength of the pulsed input radiation. At the critical power $P_{cr}$, the effect of self-focusing precisely balances the diffractive spreading of the laser beam. This can be understood as follows: as the laser beam self-focuses, the intensity of the laser beam increases which further strengthens the self-focusing effect; however, the increase in laser intensity is not indefinite and will end after the intensity of the pulse becomes strong enough to initiate the multiphoton absorption and ionization in the nonlinear medium; the multiphoton absorption and ionization produces an energy loss and generates free electron plasma, which further absorbs and defocuses the laser beam. As the laser intensity reduces, the multiphoton absorption and ionization loses its effect. Consequently, the defocused laser beam will self-focus again. Such a focusing-defocusing-refocusing process will continue insofar as the conditions (e.g., the critical power for self-focusing $P_{cr}$) for the filamentation process are still fulfilled. The above described filamentation process will result in formation of one or more filaments in the nonlinear medium.

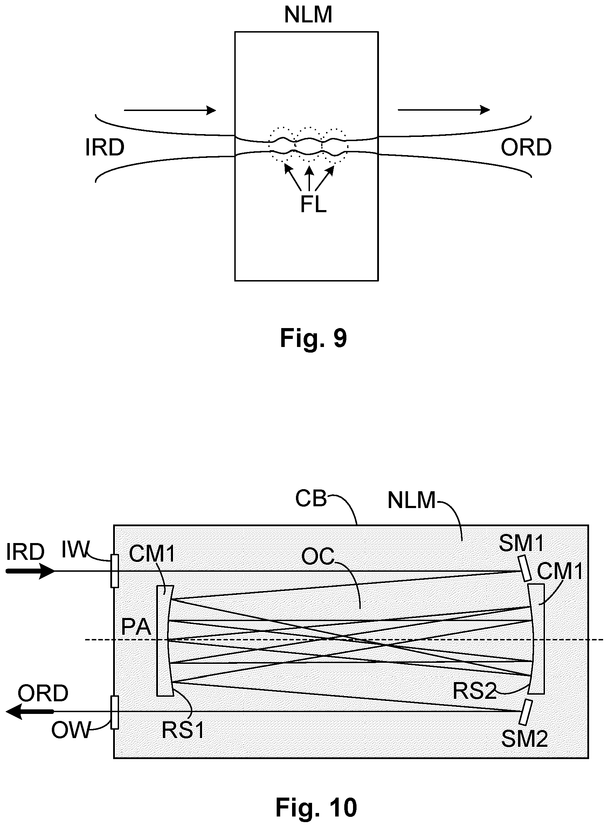

Figure 9 schematically depicts three example filaments formed as a result of the filementation process in a nonlinear medium. As shown in Figure 9, a pulsed input radiation IRD is focused into the nonlinear medium NLM. The peak power of the pulsed input radiation IRD is equal to or greater than the critical power for self-focusing $P_{cr}$. While propagating through the nonlinear medium NLM, the pulsed input radiation IRD undergoes the filamentation process as well as a nonlinear spectral broadening process (e.g., SPM). As such, the pulsed input radiation IRD repeatedly focuses and defocuses in the nonlinear medium NLM until the peak power of the pulsed input radiation IRD no longer reaches the self-focusing threshold. In this example implementation, the filamentation process results in three filaments being formed along the propagation direction of the pulsed input radiation IRD. In the meantime, the pulsed input radiation IRD is spectrally broadened by the nonlinear spectral broadening process and eventually exits the nonlinear medium NLM as the broadband output radiation ORD.

Embodiments of the proposed multipass radiation device will be described in detail below. Figure 10 schematically depicts a multipass radiation device MPC based on a gaseous nonlinear medium in accordance with an embodiment. With reference to Figure 10, the nonlinear medium NLM may be a gas, which may be for example one or more of: helium, neon, argon, krypton, xenon, and radon. The gas may substantially fill the space of the oscillating cavity OC, i.e. the space between the first reflecting surface RS1 and the second reflecting surface RS2. The multipass radiation device MPC may comprise a chamber CB arranged to at least partially enclose the nonlinear medium NLM, the first reflecting surface RS1, the second reflecting surface RS2 and the space therebetween. The chamber CB may comprise an input window IW configured to substantially transmit the pulsed input radiation IRD, and an output window OW configured to substantially transmit the broadband output radiation ORD.

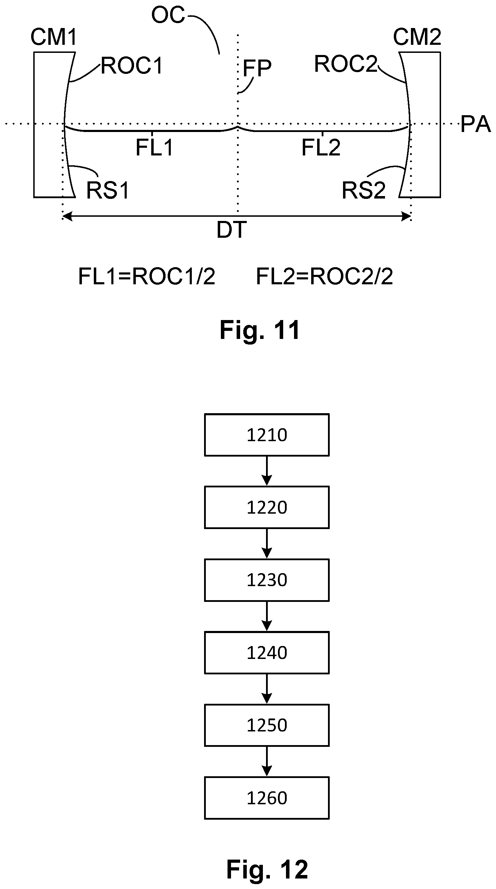

The multipass radiation device MPC may comprise a first reflecting mirror CM1 and a second reflecting mirror CM2 configured to provide the first reflecting surface RS 1 and the second reflecting surface RS2, respectively. Figure 11 illustrates a mirror arrangement suitable for use in the proposed multipass radiation device MPC (e.g., as shown in Figure 10). As shown in Figure 11, the first reflecting surface RS 1 and the second reflecting surface RS2 may both be curved inwardly or concavely and may have a first radius of curvature ROC1 and a second radius of curvature ROC2, respectively. Correspondingly, the first reflecting mirror CM1 and the second reflecting mirror CM2 may both be regarded as a concave mirror. The first reflecting surface RS 1 and the second reflecting surface RS2 may be symmetrical about a common principal axis PA (or a longitudinal axis) and may be separated by a distance DT along the common principal axis PA. The distance DT is equal to one half of a sum of the first radius of curvature ROC1 and the second radius of curvature ROC2. For a concave mirror, it is known that the focal length FL and the radius of curvature ROC of the mirror fulfill the following relationship:

$$FL = ROC/2. \hspace{4cm} [4]$$

Thus, the separation distance DT between the two reflecting surfaces RS1, RS2 is also equal to a sum of the first focal length FL1 of the first reflecting mirror CM1 and the second focal length FL2 of the second reflecting mirror CM2. In this way, the principal foci of the first reflecting mirror CM1 and the second reflecting mirror CM2 overlap spatially at an intra-cavity focus plane FP of the oscillating cavity OC. In an embodiment, the first radius of curvature ROC1 and the second radius of curvature ROC2 may be equal to each other. In such a case, the separation distance DT between the two reflecting mirrors is equal to the radius of curvature ROC1, ROC2. In an embodiment, the first radius of curvature ROC1 and the second radius of curvature ROC2 may be different from each other.

In an embodiment, the multipass radiation device MPC may comprise an input mode-matching arrangement (not shown) for optimally coupling the pulsed input radiation IRD into the oscillating cavity OC. The input mode-matching arrangement may be configured to adjust a beam size and/or a divergence of the pulsed input radiation IRD such that the resultant focus position of the pulsed input radiation IRD in the oscillating cavity OC overlaps substantially with the focus plane FP. In an embodiment, the input mode-matching arrangement may comprise one or more lenses (e.g., a mode-matching telescope). In an embodiment, the input mode-matching arrangement may comprise one or more curved mirrors. In an embodiment, the multipass radiation device MPC may comprise no input mode-matching arrangement.

In such a case, the mode characteristics of the pulsed input radiation IRD may be adjustable by an external mode-matching arrangement located either inside or outside a pump radiation source that emits the pulsed input radiation IRD.

In an embodiment, the multipass radiation device MPC may comprise an output mode-matching arrangement configured to adjust a beam size and/or divergence of the broadband output radiation ORD so as to meet mode requirements of any application (e.g., any aforementioned metrology application). In an embodiment, the output mode-matching arrangement may comprise one or more lenses (e.g., a mode-matching telescope). In an embodiment, the output mode-matching arrangement may comprise one or more curved mirrors. In an embodiment, the multipass radiation device MPC may comprise no output mode-matching arrangement. In such a case, the mode characteristics of the broadband input radiation IRD may be adjustable by an external mode-matching arrangement located outside the multipass radiation device, e.g., between the multipass radiation device MPC and the objective of a scatterometer.

In an embodiment, the multipass radiation device MPC may comprise one or more input steering mirrors SM1 arranged to direct the pulsed input radiation towards one of the reflecting mirrors. For a given pair of reflecting mirrors CM1, CM2, the input direction of the pulsed input radiation IRD with respect to the principal axis of the reflecting mirrors CM1, CM2 may determine a travel path of the pulsed input radiation within the oscillating cavity OC which determines a total number of passes through the nonlinear medium NLM and thus a total amount of nonlinear spectral broadening the pulsed input radiation IRD will experience. In an embodiment, the input direction and the resultant travel path of the pulsed input radiation IRD within the oscillating cavity OC may be determined using a ray-tracing software (e.g., OpticStudio marketed by Zemax Inc.).

Thus, according to another aspect of the present disclosure, there is provided a method for configuring the multipass radiation device MPC (e.g., as shown in Figure 10). With reference to Figure 12, the method may comprise for example the following six steps.

Step 1210: providing a pulsed input radiation IRD with an input spectrum (e.g., a narrowband spectrum).

Step 1220: defining a target output spectrum (e.g., a broadband spectrum).

Step 1230: determining an amount of nonlinear spectral broadening required for broadening the input spectrum to the target output spectrum.

Step 1240: determining a total number of passes through the nonlinear medium NLM for achieving the determined amount of nonlinear spectral broadening.

Step 1250: determining an input direction for the pulsed input radiation IRD to enter into the oscillating cavity OC so as to achieve the determined total number of passes through the nonlinear medium NLM.

Step 1260: directing the pulsed input radiation IRD to follow the determined input direction.

In an embodiment, the one or more input steering mirrors SM1 may be curved mirrors and thus may function at the same time as the input mode-matching arrangement.

In an embodiment, the multipass radiation device MPC may comprise one or more output steering mirrors SM2 arranged to direct the broadband output radiation ORD towards the output window OW of the chamber CB. In an embodiment, the one or more output steering mirrors SM2 may be curved mirrors and may function at the same time as an output mode-matching arrangement.

Referring back to Figure 10, the radiation device may be configured to ensure that the pulsed input radiation passes through the nonlinear medium NLM two or more times and each of the two or more passes through the nonlinear medium NLM may follow a different path. In some embodiments, during each pass, the pulsed input radiation IRD may undergo the aforementioned filamentation process resulting in formation of one or more filaments in the nonlinear medium NLM (see the example filaments shown in Figure 9). For a given set of parameters (e.g., pulse duration, pulse peak power, pulse repetition rate) of the pulsed input radiation IRD, the parameters of the oscillating cavity OC (e.g., the radius of curvatures ROC1, ROC2 of the first reflecting surface RS1 and the second reflecting surface RS2, the separation distance between the two reflecting surfaces RS1, RS2) and the parameters of the gaseous nonlinear medium NLM (e.g., gas type, gas pressure) may be configured to enable the filamentation process for each pass of the pulsed input radiation IRD through the nonlinear medium NLM. In some embodiments, during some of the two or more passes, the pulsed input radiation IRD may undergo the aforementioned filamentation process resulting in formation of one or more filaments in the nonlinear medium NLM. The filamentation process enhances the effect of nonlinear spectral broadening in the nonlinear medium for each pass and therefore improves the efficiency of converting the pulsed input radiation IRD to the target broadband output radiation ORD.

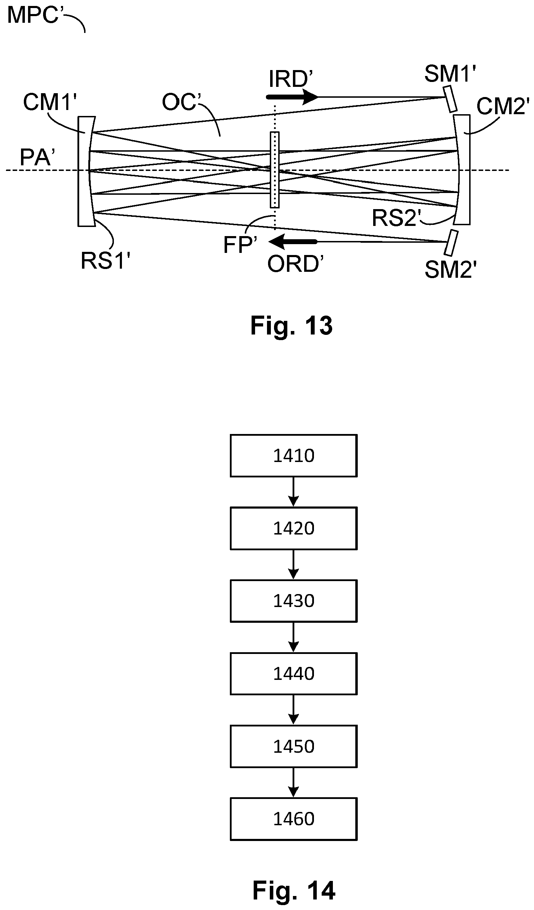

A person skilled in the art will appreciate that the nonlinear medium NLM is not limited to gaseous nonlinear medium but can be any nonlinear medium (e.g., a solid, a liquid) which is capable of enabling nonlinear spectral broadening and filamentation of the pulsed input radiation IRD. Figure 13 schematically depicts a multipass radiation device MPC' based on a solid-state nonlinear medium NLM' in accordance with an embodiment. The solid-state nonlinear medium NLM' may be for example an yttrium aluminum garnet (YAG) crystal, or a fused silica crystal. The solid nonlinear medium NLM' may be placed at a position substantially at the focus plane FP' of the oscillating cavity to benefit from a higher peak intensity of the pulsed input radiation IRD'. Note that the mirror arrangement shown in Figure 11 is equally suitable for the embodiment shown in Figure 13.

In the embodiment of Figure 13, the multipass radiation device MPC' may comprise no chamber CB. The pulsed input radiation IRD' may be directed into the oscillating cavity OC' by one or more input steering mirrors SM1'. The one or more input steering mirrors SM1' may be curved mirrors and may function at the same time as an input mode-matching arrangement (e.g., as described above with respect to the embodiment shown in Figure 10). In an embodiment, an input mode-matching arrangement may be placed in the beam path of the pulsed input radiation IRD' either upstream the one or more input steering mirrors SM1' or in-between two input steering mirrors.

As shown in Figure 13, the pulsed input radiation IRD' may be focused directly into the solid-state nonlinear medium NLM'. The pulsed input radiation IRD' may follow a predefined input direction having a slant angle with respect to the principal axis PA' of the reflecting surfaces RS1', RS2' (or the reflecting mirrors CM1', CM2'). Once it passes through the nonlinear medium NLM', it may continue to travel until hitting the second reflecting surface RS2' provided by the second reflecting mirror CM2'. The second reflecting surface RS2' may reflect the pulsed input radiation IRD' back to the nonlinear medium NLM'. Since the nonlinear medium NLM' is placed at the focus plane FP' of the oscillating cavity OC', the spectrally broadened pulsed input radiation IRD' is refocused into the nonlinear medium NLM' by the second reflecting surface RS2'. Once it passes through the nonlinear medium NLM', it may continue to travel until hitting the first reflecting surface RS1' provided by the second reflecting mirror CM1'. Similar to the second reflecting surface RS2', the first reflecting surface RS1' may reflect and refocus the spectrally broadened pulsed input radiation IRD' back into the nonlinear medium NLM'. Such a reflecting-focusing-reflecting process may continue until the spectrally broadened pulsed input radiation IRD' eventually leaves the oscillating cavity OC', i.e. when the spectrally broadened pulsed input radiation IRD' no longer hits any reflecting surface RS1', RS2'.

After exiting the oscillating cavity OC, the spectrally broadened pulsed input radiation IRD' may be regarded as the broadband output radiation ORD'. The multipass radiation device MPC' may comprise one or more output steering mirrors SM2' arranged to direct the broadband output radiation ORD'. In an embodiment, the one or more output steering mirrors SM2 may be curved mirrors and may function at the same time as an output mode-matching arrangement.

Similar to the embodiment shown in Figure 10, the total number of passes through the solid-state nonlinear medium NLM' may depend on the amount of spectral broadening required for broadening the spectrum of the pulsed input radiation IRD' to a target broadband spectrum. In some embodiments, during each of a plurality of passes through the solid-state nonlinear medium NLM', the pulsed input radiation IRD' may undergo a nonlinear spectral broadening process (e.g., SPM) as well as the filamentation process. As such, during each pass through the solid-state nonlinear medium NLM', one or more filaments may be formed along the propagation direction of the pulsed input radiation IRD' inside the nonlinear medium NLM'. In some embodiments, during some of the plurality of passes through the solid-state nonlinear medium NLM', the pulsed input radiation IRD' may undergo the filamentation process in addition to the nonlinear spectral broadening process.

Since both the linear and nonlinear refractive indices of a solid are considerably higher than those of a gas, the critical power for self-focusing in a solid is thus much lower than in a gas, in accordance with the equation [3]. This means that the focusing requirement for reaching the critical power for self-focusing may be relaxed and thus it may be easier to initiate the filamentation process in a solid-state nonlinear medium than in a gaseous nonlinear medium.

The pulsed input radiation IRD, IRD' may have a pulse duration less than 10000fs, 5000fs or 1000fs; e.g., a pulse duration of between 1 and 10000 fs, or between 1 and 5000 fs, or between 1 and 1000 fs, or between 10 and 500 fs, or between 50 fs and 500 fs, or between 50 fs and 200 fs, or between 100 fs and 200 fs. The pulsed input radiation IRD, IRD' may have a center wavelength lying in a wavelength range between 400 nm and 2000 nm, or between 400 nm and 1600 nm, or between 400 nm and 1200 nm, or between 600 nm and 1000 nm.

The broadband output radiation ORD, ORD' may have a spectrum spanning from 200 nm to 2000 nm, or from 200 nm to 1600 nm, or from 200 nm to 1200 nm, or from 400 nm to 1000 nm.

According to another different aspect of the present disclosure, there is provided a method for configuring the radiation source comprising the multipass radiation device MPC, MPC' and a pump radiation source configured to emit the pulsed input radiation IRD. With reference to Figure 14, the method may comprise for example the following six steps.

Step 1410: providing the nonlinear medium NLM, NLM' for spectral broadening of the pulsed input radiation IRD, IRD'.

Step 1420: determining a critical power for self-focusing in the nonlinear medium NLM, NLM'.

Step 1430: configuring the pump radiation source such that the pulsed input radiation IRD, IRD' has a peak power equal to or greater than the determined critical power for self-focusing.

Step 1440: determining a focused beam size of the pulsed input radiation IRD, IRD' in the oscillating cavity having a sufficient intensity for enabling the filamentation process.

Step 1450: determining a radius of curvature of the first reflecting surface RS1, RS1' and a radius of curvature of the second reflecting surface RS2, RS2' such that upon being reflected by any of the first reflecting surface RS1, RS1' and the second reflecting surface RS2, RS2', the pulsed input radiation IRD, IRD' is focused to have a beam size substantially the same as the determined focused beam size at the focus plane FP, FP' of the oscillating cavity OC, OC'.

Step 1460: separating the first reflecting surface RS1, RS1' and the second reflecting surface RS2, RS2' along a common longitudinal axis PA, PA' by a distance equal to one half of a sum of the radius of curvature of the first reflecting surface RS1, RS1' and the second radius of curvature of the second reflecting surface RS2, RS2'.

In an embodiment, the method may further comprise adjusting a beam size and/or a divergence of the pulsed input radiation such that a focus position of the pulsed input radiation in the oscillating cavity overlaps substantially with the intra-cavity focus plane of the oscillating cavity.

In an embodiment, the nonlinear medium may be a solid-state medium and the method may further comprising: placing the nonlinear medium at a position substantially overlapped with the focus plane of the oscillating cavity.

It will be appreciated that the above embodiments are provided for the purpose of describing the proposed concept and are not intended to limit the scope of the present disclosure. Of course, other embodiments can be envisaged.

For example, in an embodiment, the multipass radiation device MPC, MPC' may comprise a transport fiber configured to transport the broadband output radiation ORD, ORD' to a different location (e.g., one of the aforementioned metrology tools). The transport fiber may be for example a single mode photonic crystal fiber, such as a HC-PCF. In an embodiment, one or both of the first reflecting mirror CM1, CM1' and the second reflecting mirror CM2, CM2' may comprise a dispersion compensating coating configured to provide a high reflection coefficient for the pulsed input radiation IRD, IRD' while substantially compensating the dispersion accumulated by the pulsed input radiation IRD, IRD' through the travel within oscillating cavity OC, OC'. Additionally or optionally, one or more of the input steering mirrors SM1, SM1' and/or the output steering mirrors SM2, SM2' may also comprise a dispersion compensating coating. In this manner, the broadband output radiation ORD, ORD' may simultaneously have a broad spectral profile and a substantially compressed temporal profile.

After temporal compression or dispersion compensation, the broadband output radiation ORD, ORD' may have a pulse duration of between 1 and 10000 fs, or between 1 and 5000 fs, or between 1 and 1000 fs, or between 10 and 500 fs, or between 50 fs and 500 fs, or between 50 fs and 200 fs, or between 100 fs and 200 fs.

In an embodiment, the multipass radiation device MPC, MPC' may comprise a solid monolithic element having a first end segment configured to provide the first reflecting surface RS1, RS1', a second end segment configured to provide the second reflecting surface RS2, RS2', and a central segment acting as the nonlinear medium NLM, NLM'. The three segments may be substantially transparent to the pulsed input radiation IRD, IRD' and the broadband output radiation ORD, ORD'. The first and second segments may be made of for example fused silica and the central segment may be made of YAG. The three segments may be bonded together to form the monolithic part with the central segment being sandwiched by the first end segment and the second end segment. The first reflecting surface RS1, RS1' may be an external surface of the first end segment and the second reflecting surface RS2, RS2' may be an external surface of the second end segment. Both of the first reflecting surface RS1, RS1' and the second reflecting surface RS2, RS2' may be curved surfaces (e.g., curved inwardly from the central segment).

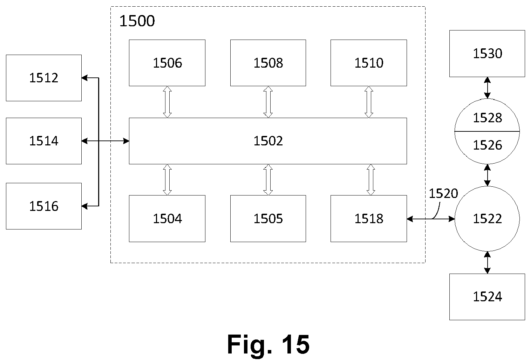

Figure 15 is a block diagram that illustrates a computer system 1500 that may assist in implementing the methods and flows disclosed herein. Computer system 1500 includes a bus 1502 or other communication mechanism for communicating information, and a processor 1504 (or multiple processors 1504 and 1505) coupled with bus 1502 for processing information. Computer system 1500 also includes a main memory 1506, such as a random access memory (RAM) or other dynamic storage device, coupled to bus 1502 for storing information and instructions to be executed by processor 1504. Main memory 1506 also may be used for storing temporary variables or other intermediate information during execution of instructions to be executed by processor 1504. Computer system 1500 further includes a read only memory (ROM) 1508 or other static storage device coupled to bus 1502 for storing static information and instructions for processor 1504. A storage device 1510, such as a magnetic disk or optical disk, is provided and coupled to bus 1502 for storing information and instructions.

Computer system 1500 may be coupled via bus 1502 to a display 1512, such as a cathode ray tube (CRT) or flat panel or touch panel display for displaying information to a computer user. An input device 1514, including alphanumeric and other keys, is coupled to bus 1502 for communicating information and command selections to processor 1504. Another type of user input device is cursor control 1516, such as a mouse, a trackball, or cursor direction keys for communicating direction information and command selections to processor 1504 and for controlling cursor movement on display 1512. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1500 in response to processor 1504 executing one or more sequences of one or more instructions contained in main memory 1506. Such instructions may be read into main memory 1506 from another computer-readable medium, such as storage device 1510. Execution of the sequences of instructions contained in main memory 1506 causes processor 1504 to perform the process steps described herein. One or more processors in a multi-processing arrangement may also be employed to execute the sequences of instructions contained in main memory 1506. In an alternative embodiment, hard-wired circuitry may be used in place of or in combination with software instructions. Thus, the description herein is not limited to any specific combination of hardware circuitry and software.

**EP 4 336 251 A1**

The term "computer-readable medium" as used herein refers to any medium that participates in providing instructions to processor 1504 for execution. Such a medium may take many forms, including but not limited to, non-volatile media, volatile media, and transmission media. Non-volatile media include, for example, optical or magnetic disks, such as storage device 1510. Volatile media include dynamic memory, such as main memory 1506. Transmission media include coaxial cables, copper wire and fiber optics, including the wires that comprise bus 1502. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1504 for execution. For example, the instructions may initially be borne on a magnetic disk of a remote computer. The remote computer can load the instructions into its dynamic memory and send the instructions over a telephone line using a modem. A modem local to computer system 1500 can receive the data on the telephone line and use an infrared transmitter to convert the data to an infrared signal. An infrared detector coupled to bus 1502 can receive the data carried in the infrared signal and place the data on bus 1502. Bus 1502 carries the data to main memory 1506, from which processor 1504 retrieves and executes the instructions. The instructions received by main memory 1506 may optionally be stored on storage device 1510 either before or after execution by processor 1504.

Computer system 1500 also preferably includes a communication interface 1518 coupled to bus 1502. Communication interface 1518 provides a two-way data communication coupling to a network link 1520 that is connected to a local network 1522. For example, communication interface 1518 may be an integrated services digital network (ISDN) card or a modem to provide a data communication connection to a corresponding type of telephone line. As another example, communication interface 1518 may be a local area network (LAN) card to provide a data communication connection to a compatible LAN. Wireless links may also be implemented. In any such implementation, communication interface 1518 sends and receives electrical, electromagnetic or optical signals that carry digital data streams representing various types of information.

Network link 1520 typically provides data communication through one or more networks to other data devices. For example, network link 1520 may provide a connection through local network 1522 to a host computer 1524 or to data equipment operated by an Internet Service Provider (ISP) 1526. ISP 1526 in turn provides data communication services through the worldwide packet data communication network, now commonly referred to as the "Internet" 1528. Local network 1522 and Internet 1528 both use electrical, electromagnetic or optical signals that carry digital data streams. The signals through the various networks and the signals on network link 1520 and through communication interface 1518, which carry the digital data to and from computer system 1500, are exemplary forms of carrier waves transporting the information.

Computer system 1500 may send messages and receive data, including program code, through the network(s), network link 1520, and communication interface 1518. In the Internet example, a server 1530 might transmit a requested code for an application program through Internet 1528, ISP 1526, local network 1522 and communication interface 1518. One such downloaded application may provide for one or more of the techniques described herein, for example. The received code may be executed by processor 1504 as it is received, and/or stored in storage device 1510, or other non-volatile storage for later execution. In this manner, computer system 1500 may obtain application code in the form of a carrier wave.

Further embodiments are disclosed in the subsequent list of numbered clauses:

1. A radiation device for generating broadband output radiation upon receiving pulsed input radiation, the radiation device comprising:

an oscillating cavity comprising a first reflecting surface and a second reflecting surface; and
a nonlinear medium located between the first reflecting surface and the second reflecting surface;
wherein the oscillating cavity is configured to receive and to oscillate therewithin said pulsed input radiation such that the pulsed input radiation undergoes a filamentation process resulting in formation of one or more filaments in the nonlinear medium and such that the pulsed input radiation undergoes a plurality of passes through the nonlinear medium such that it is spectrally broadened by the nonlinear medium to form the broadband output radiation.

2. A radiation device as defined in clause 1, wherein each of the plurality of passes through the nonlinear medium follows a different path.

3. A radiation device as defined in clause 1 or 2, wherein the pulsed input radiation undergoes the filamentation

15

process during two or more of the plurality of passes through the nonlinear medium.

4. A radiation device as defined in any preceding clause, wherein the nonlinear spectral broadening process comprises a self-phase modulation process.

5. A radiation device as defined in any preceding clause, wherein the first reflecting surface and the second reflecting surface are both curved concavely.

6. A radiation device as defined in any preceding clause, wherein said first reflecting surface and the second reflecting surface each define a common intra-cavity focus plane at which said pulsed input radiation is focused following each pass within the oscillating cavity.

7. A radiation device as defined in clause 6, wherein said nonlinear medium is comprised at least partially at said intra-cavity focus plane.

8. A radiation device as defined in any preceding clause, further comprising a mode-matching arrangement configured to adjust a beam size and/or a divergence of the pulsed input radiation such that a focus position of the pulsed input radiation in the oscillating cavity is substantially at said intra-cavity focus plane.

9. A radiation device as defined in clause 8, wherein the mode-matching arrangement comprises one or more lenses, one or more curved mirrors, or a combination thereof.

10. A radiation device as defined in any preceding clause, wherein the first reflecting surface has a first radius of curvature and the second reflecting surface has a second radius of curvature; and wherein the first reflecting surface and the second reflecting surface are symmetrical about a common longitudinal axis and are separated along the common longitudinal axis by a distance equal to one half of a sum of the first radius of curvature and the second radius of curvature.

11. A radiation device as defined in clause 10, wherein the first radius of curvature and the second radius of curvature are equal.

12. A radiation device as defined in clause 10, wherein the first radius of curvature and the second radius of curvature are different.

13. A radiation device as defined in any of clauses 10 to 12, wherein the first radius of curvature and the second radius of curvature are such that upon being reflected by either of the first reflecting surface and the second reflecting surface, the pulsed input radiation is focused to a spot having a sufficient peak intensity for enabling the filamentation process.

14. A radiation device as defined in any preceding clause, further comprising a first reflecting mirror configured to provide the first reflecting surface and a second reflecting mirror configured to provide the second reflecting surface.

15. A radiation device as defined in clause 14, wherein one or both of the first reflecting mirror and the second reflecting mirror comprise a dispersion compensating coating configured to provide a high reflection coefficient for the pulsed input radiation while substantially compensating a dispersion accumulated by the pulsed input radiation through its travel within oscillating cavity.

16. A radiation device as defined in any preceding clause, wherein the nonlinear medium is a gas.

17. A radiation device as defined in clause 16, wherein the nonlinear medium is one or more of: helium, neon, argon, krypton, xenon, and radon.

18. A radiation device as defined in any of clauses 1 to 15, wherein the nonlinear medium is a liquid.

19. A radiation device as defined in any of clauses 1 to 15, wherein the nonlinear medium is a solid.

20. A radiation device as defined in clause 19, wherein the nonlinear medium is an yttrium aluminum garnet (YAG) crystal or a fused silica crystal.

21. A radiation device as defined in any preceding clause, further comprising a chamber arranged to at least partially enclose the first reflecting surface, the second reflecting surface and the nonlinear medium.

22. A radiation device as defined in clause 21, wherein the chamber comprises an input window configured to substantially transmit the pulsed input radiation, and an output window configured to substantially transmit the broadband output radiation.

23. A radiation device as defined in any preceding clause, wherein the pulsed input radiation has a pulse duration of between 1 and 10000 fs.

24. A radiation device as defined in any preceding clause, wherein the pulsed input radiation has a center wavelength of between 400 nm and 2000 nm.

25. A radiation device as defined in any preceding clause, wherein the broadband output radiation has a spectrum that at least partially overlaps with a spectral range from 200nm to 2000nm, or, optionally, the broadband radiation has a spectrum spanning from 200 nm to 2000 nm.

26. A radiation device as defined in any preceding clause, further comprising a transportation fiber for transporting the broadband output radiation.

27. A radiation device as defined in clause 26, wherein the transportation fiber is a single-mode fiber photonic crystal fiber (PCF).

28. A radiation device as defined in clause 27, wherein the transportation fiber is a single-mode hollow-core photonic crystal fiber (HC-PCF).

29. A radiation source, comprising

a radiation device as defined in any preceding clause, and

a pump radiation source configured to output the pulsed input radiation.

30. A metrology device comprising a radiation source as defined in any preceding clause.

31. A metrology device as defined in clause 30, comprising a scatterometer metrology apparatus, a level sensor or an alignment sensor.

32. A method for configuring a radiation device as defined in any of clauses 1 to 28, comprising:

providing the pulsed input radiation having an input spectrum;

defining a target output spectrum;

determining an amount of nonlinear spectral broadening required for broadening the input spectrum to the target output spectrum via the nonlinear spectral broadening process;

determining a total number of passes through the nonlinear medium for achieving the determined amount of nonlinear spectral broadening;

determining an input direction for the pulsed input radiation to enter into the oscillating cavity so as to achieve the determined total number of passes through the nonlinear medium; and

directing the pulsed input radiation to follow the determined input direction.

33. A method for configuring a radiation source as defined in clause 29, comprising:

determining a critical power for self-focusing in the nonlinear medium;

configuring the pump radiation source such that the pulsed input radiation has a peak power equal to or greater than the determined critical power for self-focusing;

determining a focused beam size of the pulsed input radiation in the oscillating cavity having a sufficient intensity for enabling the filamentation process;

determining a radius of curvature of the first reflecting surface and/or a radius of curvature of the second reflecting surface such that upon being reflected by any of the first reflecting surface and the second reflecting surface, the pulsed input radiation is focused to have a beam size substantially the same as the determined focused beam size at the focus plane of the oscillating cavity; and

separating the first reflecting surface and the second reflecting surface along a common longitudinal axis by a distance equal to one half of a sum of the radius of curvature of the first reflecting surface and the radius of curvature of the second reflecting surface.

34. A method as defined in clause 33, further comprising adjusting a beam size and/or a divergence of the pulsed input radiation such that a focus position of the pulsed input radiation in the oscillating cavity overlaps substantially with the intra-cavity focus plane of the oscillating cavity.

35. A method as defined in clause 33 or 34, wherein the nonlinear medium is a solid-state medium and the method further comprising:

placing the nonlinear medium at a position substantially overlapped with the focus plane of the oscillating cavity.

36. A method for generating a broadband output radiation, comprising:

generating a pulsed input radiation;

repeatedly reflecting the pulsed input radiation back and forth in a plurality of passes through a nonlinear medium such that the pulsed input radiation undergoes a filamentation process resulting in formation of one or more filaments in the nonlinear medium and such that the pulsed input radiation is spectrally broadened by the nonlinear medium to form the broadband output radiation after the plurality passes through the nonlinear medium; and

outputting the broadband output radiation.

37. A method as defined in clause 36, wherein each reflection of said repeatedly reflecting step comprises focusing the pulsed input radiation to a focus plane, and wherein the nonlinear medium is comprised at least partially at the focus plane.

38. A method as defined in clause 36 or 37, wherein each reflection of said repeatedly reflecting step comprises compensating a dispersion of the pulsed input radiation during the plurality passes through the nonlinear medium.

39. A method as defined in clause 36 to 38, wherein each of the plurality of passes through the nonlinear medium follows a different path.

40. A method as defined in any of clauses 36 to 39, wherein the pulsed input radiation undergoes the filamentation process during each of the plurality of passes through the nonlinear medium.

41. A method as defined in any of clauses 36 to 40, wherein the nonlinear spectral broadening process comprises a self-phase modulation process.

42. A method as defined in any of clauses 37 to 41, wherein the receiving step comprises adjusting a beam size and/or a divergence of the pulsed input radiation to result in a focus position of the pulsed input radiation being substantially at the focus plane.

43. A method as defined in any preceding clause, wherein the outputting step comprises coupling the broadband output radiation into a transport fiber.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be mde to the invention as described without departing from the scope of the claims set out below.

## Claims

1.  A radiation device for generating broadband output radiation upon receiving pulsed input radiation, the radiation device comprising:

    an oscillating cavity comprising a first reflecting surface and a second reflecting surface; and
    a nonlinear medium located between the first reflecting surface and the second reflecting surface;
    wherein the oscillating cavity is configured to receive and to oscillate therewithin said pulsed input radiation such that the pulsed input radiation undergoes a filamentation process resulting in formation of one or more filaments in the nonlinear medium and such that the pulsed input radiation undergoes a plurality of passes through the nonlinear medium such that it is spectrally broadened by the nonlinear medium to form the broadband output radiation.

2.  A radiation device as claimed in claim 1, wherein each of the plurality of passes through the nonlinear medium follows a different path.

3.  A radiation device as claimed in claim 1 or 2, wherein the pulsed input radiation undergoes the filamentation process during two or more of the plurality of passes through the nonlinear medium.

4.  A radiation device as claimed in any preceding claim, wherein the nonlinear spectral broadening process comprises a self-phase modulation process.

5.  A radiation device as claimed in any preceding claim, wherein the first reflecting surface and the second reflecting surface are both curved concavely.

6.  A radiation device as claimed in any preceding claim, wherein said first reflecting surface and the second reflecting surface each define a common intra-cavity focus plane at which said pulsed input radiation is focused following each pass within the oscillating cavity, and, optionally, said nonlinear medium is comprised at least partially at said intra-cavity focus plane.

7. A radiation device as claimed in any preceding claim, further comprising a mode-matching arrangement configured to adjust a beam size and/or a divergence of the pulsed input radiation such that a focus position of the pulsed input radiation in the oscillating cavity is substantially at said intra-cavity focus plane, and, optionally, the mode-matching arrangement comprises one or more lenses, one or more curved mirrors, or a combination thereof.

8. A radiation device as claimed in any preceding claim, wherein the first reflecting surface has a first radius of curvature and the second reflecting surface has a second radius of curvature; and wherein the first reflecting surface and the second reflecting surface are symmetrical about a common longitudinal axis and are separated along the common longitudinal axis by a distance equal to one half of a sum of the first radius of curvature and the second radius of curvature.

9. A radiation device as claimed in claim 8, wherein the first radius of curvature and the second radius of curvature are such that upon being reflected by either of the first reflecting surface and the second reflecting surface, the pulsed input radiation is focused to a spot having a sufficient peak intensity for enabling the filamentation process.

10. A radiation device as claimed in any preceding claim, further comprising a first reflecting mirror configured to provide the first reflecting surface and a second reflecting mirror configured to provide the second reflecting surface, and, optionally, one or both of the first reflecting mirror and the second reflecting mirror comprise a dispersion compensating coating configured to provide a high reflection coefficient for the pulsed input radiation while substantially compensating a dispersion accumulated by the pulsed input radiation through its travel within oscillating cavity.

11. A radiation device as claimed in any preceding claim, wherein at least one of:

- the nonlinear medium is a gas, optionally, one or more of: helium, neon, argon, krypton, xenon, and radon,
- the nonlinear medium is a liquid, and
- the nonlinear medium is a solid, optionally, an yttrium aluminum garnet (YAG) crystal or a fused silica crystal.

12. A radiation device as claimed in any preceding claim, further comprising a chamber arranged to at least partially enclose the first reflecting surface, the second reflecting surface and the nonlinear medium, and, optionally, the chamber comprises an input window configured to substantially transmit the pulsed input radiation, and an output window configured to substantially transmit the broadband output radiation.

13. A metrology device comprising a radiation source as claimed in any preceding claim.

14. A metrology device as claimed in claim 13, comprising a scatterometer metrology apparatus, a level sensor or an alignment sensor.

15. A method for configuring a radiation device as claimed in any of claims 1 to 12, comprising:

providing the pulsed input radiation having an input spectrum;
defining a target output spectrum;
determining an amount of nonlinear spectral broadening required for broadening the input spectrum to the target output spectrum via the nonlinear spectral broadening process;
determining a total number of passes through the nonlinear medium for achieving the determined amount of nonlinear spectral broadening;
determining an input direction for the pulsed input radiation to enter into the oscillating cavity so as to achieve the determined total number of passes through the nonlinear medium; and
directing the pulsed input radiation to follow the determined input direction.

Fig. 1

Fig. 2

**Fig. 3**

**Fig. 4**

**Fig. 5**

**Fig. 6**

**Fig. 7**

**Fig. 8**

NLM

IRD

ORD

FL

**Fig. 9**

CB        NLM

IRD   IW   CM1        OC        SM1

CM1

PA

OC

RS2

ORD

OW   RS1        SM2

**Fig. 10**

FL1=ROC1/2     FL2=ROC2/2

**Fig. 11**

**Fig. 12**

MPC'

CM1'    OC'    IRD'    SM1'

PA'    CM2'

RS2'

RS1'    FP'    ORD'    SM2'

**Fig. 13**

1410

1420

1430

1440

1450

1460

**Fig. 14**

1500

1512

1514

1516

1506

1508

1510

1502

1504

1505

1518

1530

1528

1526

1520

1522

1524

## Fig. 15

Europäisches
Patentamt

European
Patent Office

Office européen
des brevets

# EUROPEAN SEARCH REPORT

**Application Number**

EP 22 19 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOUKUN LIANG ET AL: "Three-octave-spanning supercontinuum generation and sub-two-cycle self-compression of mid-infrared filaments in dielectrics", OPTICS LETTERS, OPTICAL SOCIETY OF AMERICA, US, vol. 40, no. 6, 11 March 2015 (2015-03-11) , pages 1069-1072, XP001594452, ISSN: 0146-9592, DOI: 10.1364/OL.40.001069 [retrieved on 2015-03-11] * abstract * | 1,3,4,6, 7,10-15 | INV. G02F1/35 |
| X | US 2017/125964 A1 (RUSSBUELDT PETER [DE] ET AL) 4 May 2017 (2017-05-04) * paragraph [0011] * * figures 3,4 * | 1-11,15 | |
| X | US 2009/141340 A1 (SHARPING JAY E [US] ET AL) 4 June 2009 (2009-06-04) * figure 1C * | 1 | |
| A,D | CAO HUABAO ET AL: "Multipass-cell-based post-compression of radially and azimuthally polarized pulses to the sub-two-cycle regime", JOURNAL OF THE OPTICAL SOCIETY OF AMERICA - B., vol. 36, no. 9, 19 August 2019 (2019-08-19), pages 2517-2525, XP055847378, US ISSN: 0740-3224, DOI: 10.1364/JOSAB.36.002517 * figure 1 * | 1-15 | TECHNICAL FIELDS SEARCHED (IPC) G02F |

-/--

The present search report has been drawn up for all claims

| Place of search | Date of completion of the search | Examiner |
|---|---|---|
| The Hague | 27 January 2023 | Gill, Richard |

EPO FORM 1503 03.82 (P04C01)

Europäisches
Patentamt

European
Patent Office

Office européen
des brevets

# EUROPEAN SEARCH REPORT

**Application Number**

EP 22 19 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/316831 A1 (KAFKA JAMES [US] ET AL) 5 November 2015 (2015-11-05) * figure 6A * | 1-15 | |
| A | DE 10 2020 204808 A1 (TRUMPF LASER GMBH [DE]) 21 October 2021 (2021-10-21) * figures 1A, 1B * | 5,8,9 | |

TECHNICAL FIELDS SEARCHED (IPC)

The present search report has been drawn up for all claims

| Place of search | Date of completion of the search | Examiner |
|---|---|---|
| The Hague | 27 January 2023 | Gill, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 336 251 A1

**ANNEX TO THE EUROPEAN SEARCH REPORT
ON EUROPEAN PATENT APPLICATION NO.**                    EP 22 19 5017

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2023

| Patent document cited in search report | | Publication date | Patent family member(s) | | Publication date |
|---|---|---|---|---|---|
| US 2017125964 | A1 | 04-05-2017 | DE 102014007159 A1 | | 19-11-2015 |
| | | | EP 3143669 A1 | | 22-03-2017 |
| | | | JP 6561119 B2 | | 14-08-2019 |
| | | | JP 2017516160 A | | 15-06-2017 |
| | | | US 2017125964 A1 | | 04-05-2017 |
| | | | WO 2015173245 A1 | | 19-11-2015 |
| US 2009141340 | A1 | 04-06-2009 | NONE | | |
| US 2015316831 | A1 | 05-11-2015 | EP 2939315 A2 | | 04-11-2015 |
| | | | US 2015316831 A1 | | 05-11-2015 |
| | | | WO 2014120371 A2 | | 07-08-2014 |
| DE 102020204808 | A1 | 21-10-2021 | CN 115427879 A | | 02-12-2022 |
| | | | DE 102020204808 A1 | | 21-10-2021 |
| | | | EP 4136506 A1 | | 22-02-2023 |
| | | | WO 2021209434 A1 | | 21-10-2021 |

EPO FORM P0459

For more details about this annex : see Official Journal of the European Patent Office, No. 12/82

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 7435982 B2
- US 11237486 B2
- EP 3143669 A1

**Non-patent literature cited in the description**

- **MARC HANNA ; XAVIER DÉLEN ; LOÏC LAVENU ; FLORENT GUICHARD ; YOANN ZAOUTER ; FRÉDÉRIC DRUON ; PATRICK GEORGES.** Nonlinear temporal compression in multipass cells: Theory. *Journal of the Optical Society of America B,* 2017, vol. 34, 1340

- **HUABAO CAO ; ROLAND NAGYMIHÁLY ; VLADIMIR CHYVKOV ; NIKITA KHODAKOVSKIY ; MIKHAIL KALASHNIKOV.** Multipass-cell-based post-compression of radially and azimuthally polarized pulses to the sub-two-cycle regime. *Journal of the Optical Society of America B,* 2019, vol. 36, 2517-2525
- **AUDRIUS DUBIETIS ; GINTARAS TAMOSAUSKAS ; ROSVALDAS SUMINAS ; VYTAUTAS JUKNA.** Ultrafast supercontinuum generation in bulk condensed media. *Lithuanian Journal of Physics,* 2017, vol. 57 (3), 113-157